# EUROPÄISCHE PATENTSCHRIFT

(11) **EP 0 412 200 B1**
(45) Veröffentlichungstag und Bekanntmachung des Hinweises auf die Patenterteilung: **10.02.1993**
(21) Anmeldenummer: 89114923.9
(22) Anmeldetag: 11.08.1989
(51) Int. Cl.: G01P 3/487

(54) **Dreherkennungsvorrichtung**
Rotation detecting device
Dispositif de détection d'un mouvement rotatif

(43) Veröffentlichungstag der Anmeldung: 13.02.1991
(73) Patentinhaber: SIEMENS AKTIENGESELLSCHAFT, 80333 München (DE)
(72) Erfinder: Gleixner, Ronald, Dipl.-Ing. (FH), D-8703 Ochsenfurt (DE); Lachmann, Ulrich, Dipl.-Ing. (FH), D-8000 München 70 (DE)

(56) Entgegenhaltungen:
- DE-A- 2 946 013
- FR-A- 2 341 838
- GB-A- 2 197 483
- PATENT ABSTRACTS OF JAPAN vol. 9, no. 280 (E-356)(2003) 08 November 1985, & JP-A-60 121978

## Beschreibung

Die Erfindung bezieht sich auf eine Dreherkennungsvorrichtung gemäß Oberbegriff des Anspruchs 1; eine derartige Dreherkennungsvorrichtung für ein Polrad ist aus der Siemens-Druckschrift "Differential Hall ICs for Gear Tooth Sensing in Hostile Environments" aus SENSORS January 1989 bekannt.

Um zur genauen Drehzahlerkennung auch bei nur geringen durch das Polrad gelieferten Feldstärkeänderungen klar definierte Impulsflanken in der drehzahlerkennenden digitalen Ausgangs-Signalfolge zu erreichen, ist es durch die eingangs genannte Druckschrift bekannt, auf einem einzigen Baustein zwei Hall-Sensoren phasenverschoben zur Polteilung des Polrades hintereinander anzuordnen und deren Ausgangssignale in einem nachgeschalteten Verstärker zu subtrahieren und sie, gegebenenfalls nach Durchlaufen eines Hochpasses, in einem digitalen Signalgeber, vorzugsweise nach Art eines Schmitt-Triggers, in eine drehzahlproportionale digitale Signalfolge oder ein drehrichtungsanzeigendes digitales Signal umzuformen.

Durch die GB-A-2 197 483 bzw. die korrespondierende DE-A1-36 39 108 ist ein magnetoresistiver Sensor zur Abgabe elektrischer Signale bekannt, der mit mehreren um 90° zueinander angeordneten Widerständen bestückt ist und relativ zu einem Magneten bewegt wird. Abhängig von der Drehbewegung wird im Sensor ein sinusähnlicher Spannungsverlauf erzeugt, dessen Frequenz ein Maß der Drehbewegung abbildet. Bei Zusammenschalten von mehr als zwei Sensoren werden zur Verdopplung von Impulszahlen vor deren weiterer Verarbeitung gesonderte Verzögerungselemente eingesetzt.

Ausgehend von der Erkenntnis, daß durch zur Polfolge des Polrades phasenverschobene Hintereinanderanordnung zweier Differenz-Hall-ICs und deren Ausgangssignalverarbeitung in einem nachgeschalteten Exklusiv-ODER-Gatter im Sinne einer höheren Auflösung die Signalfrequenz des Ausgangssignals gegenüber der nur eines einzigen Differenz-Hall-ICs verdoppelt werden kann, ist nach vorliegender Erfindung diese hohe Auflösung in vorteilhafter Weise bei kleinem Einbauraum, geringem Montageaufwand und hoher mechanischer Genauigkeit dadurch erzielbar, daß auf einem einzigen elektronischen Bauteil drei Hall-Sensoren als zwei Differenz-Hall-ICs derart angeordnet und zusammengeschaltet sind, daß jeweils ein Differenzsignal zwischen einem Bezugs-Hall-Sensor und jeweils einem der beiden übrigen Hall-ICs gebildet wird und eine im Vergleich zu der von einzigen Differenz-Hall-IC ableitbaren Signalfrequenz doppelte Signalfrequenz ableitbar ist.

Der Aufwand für die auf dem Baustein integrierte elektronische Auswerteschaltung mit einem den Hall-Sensoren nachgeschalteten Differenzbildner und zumindest einem digitalen Signalbildner, insbesondere in Form eines Schmitt-Triggers, kann dadurch weiter reduziert werden, daß der Ausgang des Bezugs-Hall-ICs sowohl an den Eingang eines ersten Differenzbildners als auch eines zweiten Differenzbildners mit nachgeschaltetem digitalen Signalbildner und die beiden verbleibenden Hall-ICs jeweils für sich nur an den Eingang des einen Differenzbildners oder des anderen Differenzbildners angeschlossen sind und für sämtliche Hall-Sensoren nur eine einzige gemeinsame Stromversorgung vorgesehen ist.

Die Erfindung wird im folgenden anhand zweier Ausführungsbeispiele in der Zeichnung näher erläutert; darin zeigen:
- FIG 1: in perspektivischem Teilausschnitt ein einziges, einem Polrad zugeordnetes elektronisches Bauteil mit drei hintereinander phasenverschoben zur Polteilung des Polrades angeordneten Hall-Sensoren,
- FIG 2: die in dem elektronischen Bauteil integrierte Auswerteschaltung für die Ausgangssignale der drei Hall-Sensoren,
- FIG 3: zwei hintereinander phasenverschoben zur Polfolge des Polrades angeordnete diskrete elektronische Bauteile in Form je eines Differenz-Hall-ICs,
- FIG 4,5: die jeweils in jedem der Differenz-Hall-ICs gemäß FIG 3 integrierte Auswerteschaltung.

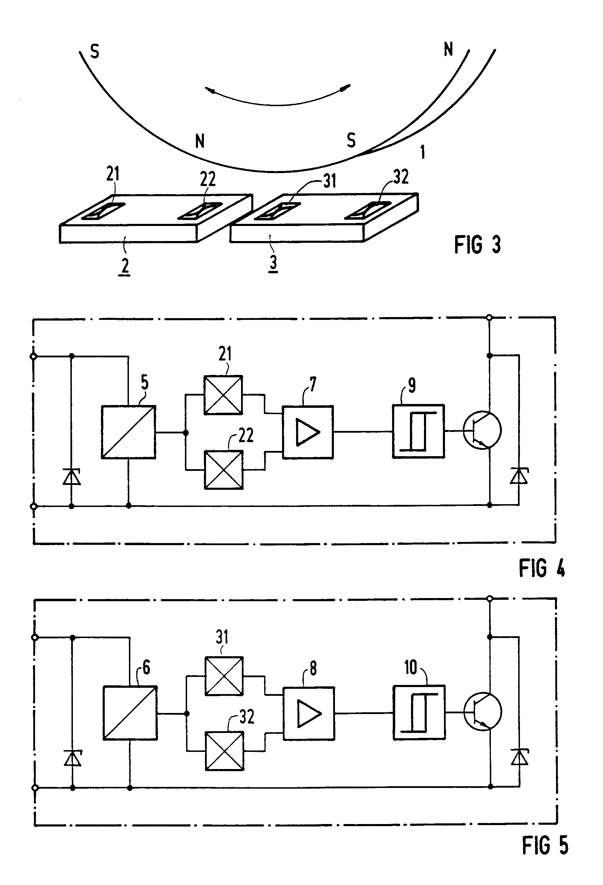

FIG 3 zeigt ein magnetisches Polrad 1 mit über den Umfang verteilter magnetischer Polfolge N,S,N... In dichtem Abstand zum Polrad 1 sind zwei voneinander getrennte diskrete elektronische Bauteile 2 bzw.3 in Form jeweils eines Differenz-Hall-ICs mit je zwei Hall-Sensoren 21,22 bzw.31,32 in Polfolgerichtung des Polrades 1 hintereinander angeordnet. In jedem elektronischen Bauteil 2 bzw.3 ist je eine elektronische Versorgungs- und Auswerteschaltung gemäß FIG 4 bzw. FIG 5 integriert.

Die Ausgangssignale der durch eine Spannungsversorgung 5 gespeisten und durch das rotierende Polrad 1 sensierten Hall-Sensoren 21,22 des elektronischen Bauteils 2 werden in dem Verstärker 7 voneinander subtrahiert und mit Hilfe des in Form eines Schmitt-Triggers ausgeführten Signalbildners 9 in eine digitale Signalfolge umgewandelt. In ähnlicher Weise entsteht eine Signalfolge durch die durch eine Spannungsversorgung 6 gespeisten Hall-Sensoren 31,32 des elektronischen Bauteils 3, deren in einem nachgeschalteten Verstärker 8 gebildete Differenz in einem Signalbildner 10 in eine digitale Signalfolge umgeformt wird, die durch entsprechende Anordnung der beiden elektronischen Bauteile 2,3 bzw. deren Hall-Sensoren 21,22 bzw.31,32 relativ zur Polfolge des Polrades 1 gegeneinander phasenverschoben sind.

In einem den beiden Auswerteschaltungen gemäß FIG 4 bzw. FIG 5 nach einer Ausgestaltung der Erfindung nachgeschalteten Exklusiv-ODER-Gatter können dann die beiden gegeneinander phasenverschobenen Signalfolgen der elektronischen Bauteile 2 bzw.3 zu einem Summensignal mit gegenüber der Frequenz der einzelner Signalfolge der Signale verdoppelter Signalfrequenz und damit erhöhten Auflösung zu einer Drehzahlmessung oder durch Phasenvergleich der beiden Signalfolgen zu einer Drehrichtungserkennung verarbeitet werden.

Erfindungsgemäß sind nun die beiden elektronischen Bauteile 2 bzw.3 zu einem einzigen IC-Bauteil zusammengefaßt, so daß Ungenauigkeiten in der Dreherkennungserfassung durch die mechanische Anordnung und Befestigung bzw. durch den Einzelbauteilen anhaftende Toleranzen, wie sie bei einer Anordnung gemäß FIG 3 auftreten können, mit Sicherheit vermieden sind.

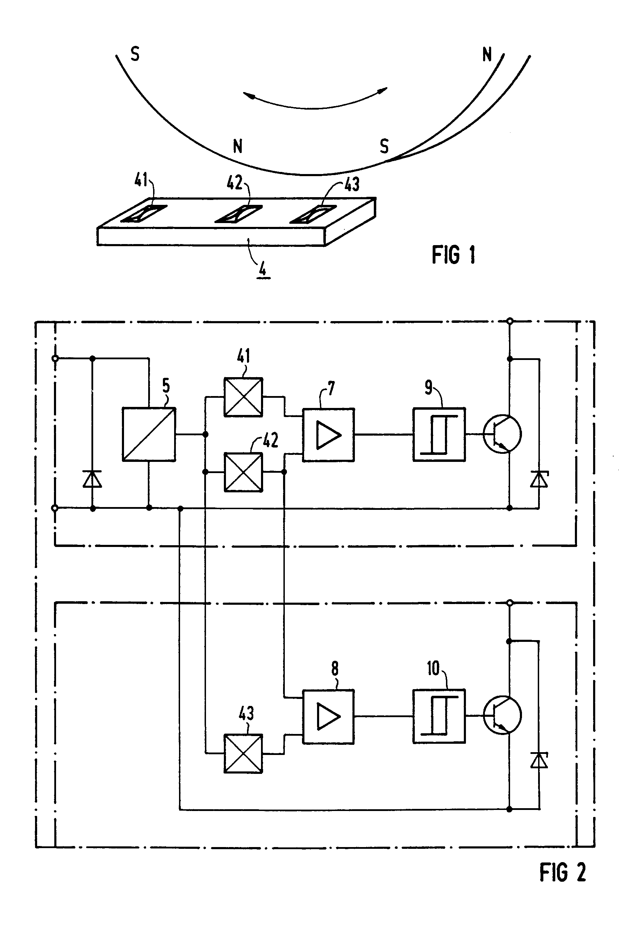

Neben dieser, insbesondere mechanisch bedingten, erhöhten Genauigkeit wird der elektronische Bauteileaufwand noch dadurch weiter gemindert, daß gemäß FIG 1 in einem einzigen elektronischen Bauteil 4 lediglich drei Hall-Sensoren 41,42,43 integriert sind, die dadurch in ihrer Signalfolge wie zwei getrennte Differenz-Hall-ICs gemäß FIG 3 auswertbar sind, daß ein Hall-Sensor 42 als Bezugs-Hall-Sensor für eine Differenzbildung zwischen jedem der verbleibenden Hall-Sensoren 41 bzw.43 gegenüber dem Hall-IC 42 eingesetzt sind.

Der elektronische Schaltungsaufwand für die drei, in dem einzigen elektronischen Bauteil 4 integrierten Hall-Sensoren 41,42, 43 kann in vorteilhafter Weise noch dadurch weiter gemindert werden, daß gemäß FIG 2 für sämtliche Hall-Sensoren 41,42,43 nur eine einzige gemeinsame Spannungsversorgung 5 vorgesehen ist und der Ausgang des Bezugs-Hall-Sensoren 42 sowohl an den Eingang eines ersten Differenzbildners 7 als auch eines zweiten Differenzbildners 8 mit jeweils nachgeschaltetem digitalen Signalbildner und die beiden verbleibenden Hall-Sensoren 41 bzw.43 jeweils für sich nur an den Eingang des einen Differenzbildners 7 oder des anderen Differenzbildners 8 angeschlossen sind.

Die Anwendung der erfindungsgemäßen Dreherkennungsvorrichtung eignet sich insbesondere für Stellantriebe mit geringer Polfolgezahl und/oder geringer Umdrehungszahl bei Forderung nach hoher Auflösung mit klar definierten Impulsflanken in dem auszuwertenden Ausgangssignal. Dementsprechend ist nach einer vorteilhaften Ausgestaltung der Erfindung das Polrad 1 als Rotor eines Stellmotors in einer elektronischen automatisierten Kupplung in einem Kraftfahrzeug vorgesehen, wie diese z.B. in dem Sachs-Journal der Firma Fichtel & Sachs AG, 8720 Schweinfurt, Ausgabe Dezember 1988, auf Seite 13 beschrieben ist.

Die Erfindung ist anhand der Dreherkennung für ein Polrad mit zwei in einem einzigen Bauteil integriertem Differenz-Hall-IC beschrieben worden; das zugrundeliegende Prinzip mit der vorteilhaften mechanischen Genauigkeit und der vorteilhaften Einsparungsmöglichkeit an elektronischen Bauteilen ist jedoch im Rahmen der Erfindung auch auf lineare Polfolgen und/oder eine Integration von mehr als zwei diskreten Differenz-Hall-ICs auf einem einzigen elektronischen IC-Baustein erstreckbar.

## Patentansprüche

1. Dreherkennungsvorrichtung mit einem einer Polfolge (N,S,N..), insbesondere einem Polrad (1), zugeordneten elektronischen Bauteil in Form zumindest eines Differenz-Hall-ICs mit einer aus der Differenz der gegeneinander phasenverschobenen Ausgangssignale zweier in Polfolgerichtung hintereinander angeordneter Hall-Sensoren (21,22;31,32 bzw.41,42;43,42) ableitbaren digitalen Signalfolge mit einer bestimmten Signalfrequenz, **dadurch gekennzeichnet**, daß auf einem einzigen elektronischen Bauteil (4) drei Hall-Sensoren (41,42,43) mit einer Differenzbildung zwischen den Ausgangssignalen von jeweils einem der Hall-Sensoren (41 bzw.43) und einem Bezugs-Hall-Sensor (42) als zwei Differenz-Hall-ICs derart zusammengefaßt sind, daß durch Kopplung der Ausgangssignale der beiden Differenz-Hall-ICs eine gegenüber der von einem einzigen Differenz-Hall-IC ableitbaren Signalfrequenz doppelte Signalfrequenz erzeugbar und durch Phasenvergleich die Drehrichtung bestimmbar ist.

2. Dreherkennungsvorrichtung mit einer auf dem elektronischen Bauteil (4) angeordneten, zumindest einen den Hall-Sensoren (41,42 bzw.43) nachgeschalteten Differenzbildner (7 bzw.8) und digitalen Signalbildner (9 bzw.10) enthaltenden elektronischen Schaltung nach Anspruch 1**, dadurch gekennzeichnet**, daß der Ausgang des Bezugs-Hall-Sensors (42) sowohl an den Eingang eines ersten Differenzbildners (7) als auch eines zweiten Differenzbildners (8) mit jeweils nachgeschaltetem digitalen Signalbildner (9 bzw.10) und die beiden verbleibenden Hall-Sensoren (41 bzw.43) jeweils für sich nur an den Eingang des einen Differenzbildners (7) oder des anderen Differenzbildners (8) angeschlossen sind.

3. Dreherkennungsvorrichtung nach Anspruch 1 und/oder 2, **dadurch gekennzeichnet**, daß für die Hall-Sensoren (41,42,43) nur eine einzige gemeinsame Spannungsversorgung (5) vorgesehen ist.

4. Dreherkennungsvorrichtung nach zumindest einem der Ansprüche 1 bis 3, **dadurch gekennzeichnet**, daß das Polrad (1) Bestandteil des Rotors eines Elektromotors in einem elektronischen Kupplungssystem in einem Kraftfahrzeug ist.

## Claims

1. Rotation detecting device having an electronic component associated with a pole sequence (N,S,N..), in particular a magnet wheel (1), in the form of at least one differential Hall IC with a digital signal sequence, which can be derived from the difference of the output signals of two Hall sensors (21,22;31,32 and 41,42;43,42) phase-displaced with respect to one another, which Hall sensors are arranged in pole-sequence direction behind one another, with a certain signal frequency, characterized in that there are combined on a single electronic component (4) three Hall sensors (41,42,43) with a differential formation between the output signals of one of the Hall sensors (41 or 43) and a reference Hall sensor (42) in each case, as two differential Hall ICs in such a way that through the coupling of the output signals of the two differential Hall ICs a signal frequency can be generated which is double that signal frequency which can be derived from a single differential Hall IC, and through phase comparison the direction of rotation can be determined.

2. Rotation detecting device having an electronic circuit arranged on the electronic component (4) and containing at least one differential generator (7 and 8) and digital signal generator (9 and 10) connected after the Hall sensors (41,42 and 43), according to claim 1, characterized in that the output of the reference Hall sensor (42) is attached both to the input of a first differential generator (7) and of a second differential generator (8) with respectively subsequently connected digital signal generator (9 and 10) and the two remaining Hall sensors (41 and 43) are in each case attached *per se* only to the input of the one differential generator (7) or the other differential generator (8).

3. Rotation detecting device according to claim 1 and/or 2, characterized in that for the Hall sensors (41,42,43) only a single common voltage supply (5) is provided.

4. Rotation detecting device according to at least one of claims 1 to 3, characterized in that the magnet wheel (1) is a component part of the rotor of an electro-motor in an electronic coupling system in a motor vehicle.

## Revendications

1. Dispositif de détection de rotation comportant un composant électronique associé à une suite de pôles (N,S, N,...), notamment une roue polaire (1), et réalisé sous la forme d'au moins un circuit intégré différentiel de Hall, à l'aide d'une suite de signaux numériques, qui peut être dérivée de la différence entre les signaux de sortie réciproquement déphasés de deux capteurs de Hall (21,22; 31,32 ou 41,42; 43,42) disposés l'un derrière l'autre dans la direction de la succession des pôles, et possédant une fréquence déterminée des signaux, caractérisé par le fait que sur un seul composant électronique (4) sont rassemblés, sous la forme de circuits intégrés différentiels de Hall, trois capteurs de Hall (41,42,43), une différence étant formée entre les signaux de sortie de respectivement l'un des capteurs de Hall (41 ou 43) et un capteur de Hall de référence (42), et que l'on peut obtenir une fréquence de signaux double de la fréquence des signaux pouvant être dérivée d'un seul circuit intégré différentiel de Hall par couplage des signaux de sortie des deux circuits intégrés différentiels de Hall et que le sens de rotation peut être déterminé au moyen d'une comparaison de phase.

2. Dispositif de détection de rotation comportant un circuit électronique disposé sur le composant électronique (4) et comportant au moins un dispositif de formation de différence (7 ou 8) et un dispositif de formation de signaux numériques (9 ou 10), qui sont branchés en aval des capteurs de Hall (41,42 ou 43), suivant la revendication 1, caractérisé par le fait que la sortie du capteur de Hall de référence (42) est raccordée aussi bien à l'entrée d'un premier dispositif de formation de différence (7) que d'un second dispositif de formation de différence (8), en aval desquels sont branchés respectivement des dispositifs de formation de signaux numériques (9 ou 10), et que les deux autres capteurs de Hall (41 et 43) sont raccordés chacun en soi uniquement à l'entrée d'un dispositif de formation de différence (7) ou de l'autre dispositif de formation de différence (8).

3. Dispositif de détection de rotation suivant la revendication 1 et/ou 2, caractérisé par le fait que pour les capteurs de Hall (41,42,43), il n'est prévu qu'une seule alimentation commune en tension (5).

4. Dispositif de détection de rotation suivant au moins l'une des revendications 1 à 3, caractérisé par le fait que la roue polaire (1) fait partie du rotor d'un moteur électrique dans un système d'embrayage électronique dans un véhicule automobile.
